# EUROPEAN PATENT SPECIFICATION

(11) **EP 3 288 839 B1**
(45) Date of publication and mention of the grant of the patent: **16.09.2020**
(21) Application number: 16722813.9
(22) Date of filing: 27.04.2016
(51) Int. Cl.: B65D 17/00, C09D 167/00, C08L 61/04, C08L 67/00, C09D 161/28, C09D 161/32

(54) **PULL TABS FOR FOOD AND/OR BEVERAGE CANS**
ZUGLASCHEN FÜR NAHRUNGSMITTEL- UND/ODER GETRÄNKEDOSEN
LANGUETTES DE TRACTION DESTINÉES À DES ALIMENTS ET/OU À DES CANETTES DE BOISSON

(30) Priority: 30.04.2015 EP 15165994
(43) Date of publication of application: 07.03.2018
(73) Proprietor: PPG Industries Ohio, Inc., Cleveland, OH 44111 (US)
(72) Inventor: MARAL, Jean-Luc, F-76700 Gonfreville L'Orcher (FR); ACHIBET, Jamal, F-76700 Gonfreville L'Orcher (FR)
(74) Representative: Appleyard Lees IP LLP
(86) International application number: PCT/EP2016/059437
(87) International publication number: WO 2016/174105

(56) References cited:
- EP-A1- 0 312 311
- EP-A1- 2 746 353
- US-A1- 2012 301 647
- US-A1- 2013 224 413

## Description

The present invention relates to pull tabs having a coating on at least a portion thereon; in particular the present invention relates to pull tabs for food and/or beverage containers having a coating on at least a portion thereon.

Typically, cans for food and/or beverages are formed from several components. A wide variety of coatings have been used to coat food and/or beverage containers and the components used to fabricate such containers, such as pull tabs. The substrates used for making metal cans are often coated using coil coating or sheet coating operations, that is, a plane, coil or sheet of a suitable substrate, for example, steel or aluminium, is coated with a suitable composition and cured. The coated substrate may then be formed into the can body, can end or can component, such as a pull tab. The coating compositions are required to have certain properties depending on which part of the food or beverage container they will be used on. For example, being capable of high speed application, having excellent adhesion to the substrate, being safe for food contact and having properties once cured that are suitable for their end use. Specifically with respect to pull tabs, coatings require flexibility and adhesion for the stamping, rolling, bending etc. processes which they are subject to during their formation.

Many of the coating compositions currently used for food and beverage containers contain epoxy resins. Such epoxy resins are typically formed from polyglycidyl ethers of bisphenol A (BPA). BPA is perceived as being harmful to human health and it is therefore desirable to eliminate it from coatings for food and/or beverage packaging containers which come into contact with food and/or beverages. Derivatives of BPA such as diglycidyl ethers of bisphenol A (BADGE), epoxy novolak resins and polyols prepared from BPA and bisphenol F (BPF) are also problematic. Therefore there is a desire to provide coating compositions for food and beverage containers which are free from BPA, BADGE and/or other derivatives, but which retain the required properties as described above.

US 2013/0224413 discloses a polyester-based coating composition for metal substrates. US 2012/0301647 discloses phosphatized polyesters and coating compositions containing the same. EP 2746353 discloses a coating composition comprising a resin material comprising polyester imide polymer, one or more titanate material and one or more OH reactive cross linking material. EP 0312311 discloses metal can ends with metal pull tabs bonded thereto.

It is an object of aspects of the present invention to provide one or more solutions to the above mentioned or other problems.

According to a first aspect of the present invention there is provided a pull tab for a food and/or beverage can coated on at least a portion thereof with a coating composition comprising:
(a) a binder comprising a polyester material,
(b) a phenolic crosslinker, and
(c) an amino crosslinker,

wherein the coating composition is substantially free of bisphenol A (BPA), bisphenol F (BPF), bisphenol A diglycidyl ether (BADGE) and bisphenol F diglycidyl ether (BFDGE).

The coating compositions according to the present invention comprise a binder comprising a polyester material (a). The polyester material according to the present invention may comprise the reaction product of a polyacid and a polyol.

"Polyacid" and like terms as used herein, refers to a compound having two or more carboxylic acid groups, such as two, three or four acid groups, and includes an ester of the polyacid (wherein one or more of the acid groups is esterified) or an anhydride. The polyacid is suitably an organic polyacid.

Suitably, the carboxylic acid groups of the polyacid may be connected by a bridging group selected from: an alkylene group; an alkenylene group; an alkynylene group; or an arylene group.

The polyester material may be formed from any suitable polyacid. Suitable examples include, but are not limited to one or more of the following: maleic acid; fumaric acid; itaconic acid; adipic acid; azelaic acid; succinic acid; sebacic acid; glutaric acid; decanoic diacid; dodecanoic diacid; phthalic acid; isophthalic acid; 5-tert-butylisophthalic acid; tetrachlorophthalic acid; tetrahydrophthalic acid; trimellitic acid; naphthalene dicarboxylic acid; naphthalene tetracarboxylic acid; terephthalic acid; hexahydrophthalic acid; methylhexahydrophthalic acid; dimethyl terephthalate; cyclohexane dicarboxylic acid; chlorendic anhydride; 1,3-cyclohexane dicarboxylic acid; 1,4-cyclohexane dicarboxylic acid; tricyclodecane polycarboxylic acid; endomethylene tetrahydrophthalic acid; endoethylene hexahydrophthalic acid; cyclohexanetetra carboxylic acid; cyclobutane tetracarboxylic; acids and anhydrides of all the aforementioned acids and combinations thereof.

In certain embodiments, the polyacid may be selected from terephthalic acid, isophthalic acid or combinations thereof. Suitably, the polyacid may be terephthalic acid.

"Polyol" and like terms, as used herein, refers to a compound having two or more hydroxyl groups, such as two, three or four hydroxyl groups. In certain embodiments, the hydroxyl groups of the polyol may be connected by a bridging group selected from: an alkylene group; an alkenylene group; an alkynylene group; or an arylene group. Suitably the polyol is an organic polyol.

The polyester material may be formed from any suitable polyol. Suitable examples include, but are not limited to one or more of the following: alkylene glycols, such as ethylene glycol; propylene glycol; diethylene glycol; dipropylene glycol; triethylene glycol; tripropylene glycol; hexylene glycol; polyethylene glycol; polypropylene glycol and neopentyl glycol; hydrogenated bisphenol A; cyclohexanediol; propanediols including 1,2-propanediol; 1,3-propanediol; butyl ethyl propanediol; 2-methyl-1,3-propanediol; and 2-ethyl-2-butyl-1,3-propanediol; butanediols including 1,4-butanediol; 1,3-butanediol; and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-capro lactone and ethylene glycol); hydroxyalkylated bisphenols; polyether glycols, for example, poly(oxytetramethylene) glycol; trimethylol propane; pentaerythritol; di-pentaerythritol; trimethylol ethane; trimethylol butane; dimethylol cyclohexane; glycerol and the like or combinations thereof.

In certain embodiments, the polyester material may be formed from an unsaturated polyol. Suitable examples of unsaturated polyols include, but are not limited to one or more of the following: trimethylol propane monoallyl ether; trimethylol ethane monoallyl ether; prop-1-ene-1,3-diol or combinations thereof.

In certain embodiments, the polyester material may be formed from a diol. Suitable examples of diols include, but are not limited to, one or more of the following: ethylene glycol; propylene glycol, such as 1,2-propanediol and 1,3-propanediol; diethylene glycol; dipropylene glycol; triethylene glycol; tetraethylene glycol; 1,4-butanediol; 1,3-butylethylpropanediol; 2-methyl-1,3-propanediol; 1,5-pentanediol; cyclohexanedimethanol; glycerol; 1,6-hexanediol; neopentyl glycol; pentaerythritol; trimethylolethane; trimethylolpropane; 1,4-benzyldimethanol; 1,4-benzyldiethanol; 2,4-dimethyl-2-ethylhexane-1,3-diol; and combinations thereof.

In certain embodiments, the polyol may be selected from neopentyl glycol, ethylene glycol, cyclohexane dimethanol, 1,2-propanediol or combinations thereof. Suitably, the polyol may be 1,2-propandiol.

Suitably, the polyester may be formed from terephthalic acid and 1,2-propanediol.

The term "alk" or "alkyl", as used herein unless otherwise defined, relates to saturated hydrocarbon radicals being straight, branched, cyclic or polycyclic moieties or combinations thereof and contain 1 to 20 carbon atoms, suitably 1 to 10 carbon atoms, more suitably 1 to 8 carbon atoms, still more suitably 1 to 6 carbon atoms, yet more suitably 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having one or several, suitably up to 4, double bonds, being straight, branched, cyclic or polycyclic moieties or combinations thereof and containing from 2 to 18 carbon atoms, suitably 2 to 10 carbon atoms, more suitably from 2 to 8 carbon atoms, still more suitably 2 to 6 carbon atoms, yet more suitably 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having one or several, suitably up to 4, triple bonds, being straight, branched, cyclic or polycyclic moieties or combinations thereof and having from 2 to 18 carbon atoms, suitably 2 to 10 carbon atoms, more suitably from 2 to 8 carbon atoms, still more suitably from 2 to 6 carbon atoms, yet more suitably 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by one or more oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C=CH, becomes ethynylene, -C=C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by one or more oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

The polyester material may be formed from any suitable molar ratio of polyacid to polyol. In certain embodiments, the molar ratio of polyacid to polyol in the polyester material may be from about 20:1 to 1:20, suitably from about 10:1 to 1:10, such as from about 5:1 to 1:5, or even from about 2:1 to 1:2. Suitably, the molar ratio of polyacid to polyol in the polyester material may be about 1:1.

In certain embodiments, the polyester material may optionally be formed from one or more additional monomers. Suitably, the polyester material may optionally include one or more additional monomers selected from monoacids or monohydric alcohols or combinations thereof. Suitably, the optional additional monomers may be organic.

In certain embodiments, the polyester material may optionally be formed from an additional monoacid. "Monoacid", and like terms as used herein, refers to compounds having one carboxylic acid group and includes an ester of the monoacid (where the acid group is esterified) or an anhydride. The monoacid is suitably an organic monoacid.

The polyester material may optionally be formed from any suitable additional monoacid. Suitable examples include, but are not limited to one or more of the following: benzoic acid; cyclohexane carboxylic acid; tricyclodecane carboxylic acid; camporic acid; benzoic acid; t-butyl benzoic acid; C₁-C₁₈ aliphatic carboxylic acids such as acetic acid; propanoic acid; butanoic acid; hexanoic acid; oleic acid; linoleic acid; undecanoic acid; lauric acid; isononanoic acid; fatty acids; hydrogenated fatty acids of naturally occurring oils; esters and/or anhydrides of any of the aforementioned acids and combinations thereof.

In certain embodiments, the polyester material may optionally be formed from an additional monohydric alcohol. "Monohydric alcohol" and like terms as used herein, refers to compounds having one hydroxyl group. Suitably, the monohydric alcohol is an organic monohydric alcohol.

The polyester material may optionally be formed from any suitable additional monohydric alcohol. Suitable examples include but are not limited to one or more of the following: benzyl alcohol; hydroxyethoxybenzene; methanol; ethanol; propanol; butanol; pentanol; hexanol; heptanol; dodecyl alcohol; stearyl alcohol; oleyl alcohol; undecanol; cyclohexanol; phenol; phenyl carbinol; methylphenyl carbinol; cresol; monoethers of glycols; halogen-substituted or other substituted alcohols and combinations thereof.

The polyester material may optionally be formed from any suitable molar ratio of polyacid + polyol to one or more additional monomer. In certain embodiments, the polyester material may comprise a molar ratio of polyacid + polyol to one or more additional monomer of from 100:1 to 1:1, suitably from 100:1 to 5:1, such as from 100:1 to 20:1, or even from 100:1 to 50:1.

In certain embodiments, the polyester material may be formed from commercially available polyester materials. Suitable commercially available polyester materials include, but are not limited to the following: the DYNAPOL (registered trademark) line of polyester resins commercially available from Evonik Industries AG, Coatings & Additives, Rodenbacher Chaussee 4, 63457 Hanau-Wolfgang, Germany; and the SKYBON (registered trademark) line of polyester resins commercially available from SK Chemicals, 310, Pangyo-rog, Bundang-gu, Seongnam-si, Gyeonggi-do 463-400 Korea.

The polyester material may have any suitable number-average molecular weight (Mn). In certain embodiments, the polyester material may have an Mn from about 1,000 Daltons (Da = g/mole) to 100,000 Da, such as from about 5,000 Da to 50,000 Da, or even from about 10,000 Da to 30,000 Da. In certain embodiments, the polyester material may have an Mn of at least about 1,000 Da, suitably at least about 5,000 Da, such as at least about 10,000 Da. In certain embodiments, the polyester material may have an Mn up to about 100,000 Da, suitably up to about 50,000 Da, such as up to about 30,000 Da. In certain embodiments, the polyester material may have an Mn from about 1,000 to 100,000 Da, suitably from about 1,000 to 50,000 Da, such as from about 1,000 to 30,000 Da. In certain embodiments, the polyester material may have an Mn from about 5,000 to 100,000 Da, suitably from about 5,000 to 50,000 Da, such as from about 5,000 to 30,000 Da. In certain embodiments, the polyester material may have an Mn from about 10,000 to 100,000 Da, suitably from about 10,000 to 50,000 Da, such as from about 10,000 to 30,000 Da.

The number-average molecular weight may be measured by any suitable method. Techniques to measure the number-average molecular weight will be well known to a person skilled in the art. Suitably, the Mn may be determined by gel permeation chromatography using a polystyrene standard according to ASTM D6579-11("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml).

The polyester material may have any suitable weight-average molecular weight (Mw). In certain embodiments, the polyester binder (a) may have an Mw from about 1,000 Daltons (Da = g/mole) to 100,000 Da, such as from about 5,000 Da to 50,000 Da, or even from about 10,000 Da to 30,000 Da. In certain embodiments, the polyester material may have an Mw of at least about 1,000 Da, suitably at least about 5,000 Da, such as at least about 10,000 Da. In certain embodiments, the polyester material may have an Mw up to about 100,000 Da, suitably up to about 50,000 Da, such as up to about 30,000 Da. In certain embodiments, the polyester material may have an Mw from about 1,000 to 100,000 Da, suitably from about 1,000 to 50,000 Da, such as from about 1,000 to 30,000 Da. In certain embodiments, the polyester material may have an Mw from about 5,000 to 100,000 Da, suitably from about 5,000 to 50,000 Da, such as from about 5,000 to 30,000 Da. In certain embodiments, the polyester material may have an Mw from about 10,000 to 100,000 Da, suitably from about 10,000 to 50,000 Da, such as from about 10,000 to 30,000 Da.

A person skilled in the art will appreciate that techniques to measure the number-average molecular weight may also be applied to measure the weight-average molecular weight.

The polyester material may have any suitable glass transition temperature (Tg). In certain embodiments, the polyester material may have a Tg from about 20 to 120 °C, suitably from about 40 to 100 °C, such as from about 60 to 80 °C.

The glass transition temperature of the polyester material may be measured by any suitable method. Methods to measure Tg will be well known to a person skilled in the art. Suitably, the Tg is measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min).

The polyester material may have any suitable gross hydroxyl value (OHV). In certain embodiments, the polyester binder (a) may have a gross OHV from about 0 to 100 KOH/g. Suitably, the polyester binder (a) may have a gross OHV from about 0 to 50 KOH/g, such as from about 0 to 30 KOH/g or even from about 0 to 20 KOH/g. In certain embodiments, the polyester material may have a gross OHV from about 0 to 20 mg KOH/g, such as from about 0.1 to 20 mg KOH/g, such as from about 0.5 to 15 mg KOH/g, or even from about 1 to 10 mg KOH/g.

Suitably, the gross OHV is expressed on solids.

The polyester material may have any suitable acid value (AV). In certain embodiments, the polyester material may have an AV from about 0 to 100 KOH/g. Suitably, the polyester material may have an AV from about 0 to 50 KOH/g, such as from about 0 to 30 KOH/g or even from about 0 to 20 KOH/g. In certain embodiments, the polyester material may have an AV from about 0 to 20 mg KOH/g, such as from about 0.1 to 20 mg KOH/g, such as from about 0.5 to 15 mg KOH/g, or even from about 1 to 10 mg KOH/g.

Suitably, the AV is expressed on solids.

In certain embodiments the polyester material according to the present invention may be prepared in the presence of an esterification catalyst. Suitably, the esterification catalyst may be chosen to promote the reaction of components by esterification and trans-esterification. Suitable examples of esterification catalysts for use in the preparation of the polyester material include, but are not limited to one or more of the following: metal compounds such as stannous octoate; stannous chloride; butyl stannoic acid (hydroxy butyl tin oxide); monobutyl tin tris (2-ethylhexanoate); chloro butyl tin dihydroxide; tetra-n-propyl titanate; tetra-n-butyl titanate; zinc acetate; acid compounds such as phosphoric acid; para-toluene sulphonic acid; dodecyl benzene sulphonic acid (DDBSA) and combinations thereof. In certain embodiments, the esterification catalyst may be dodecyl benzene sulphonic acid (DDBSA).

The esterification catalyst, when present, may be used in amounts from about 0.001 to 1% by weight on total polymer components, suitably from about 0.01 to 0.2%, such as from about 0.025 to 0.2% by weight on total polymer components.

In certain embodiments, the polyester material may comprise the reaction product of;
(i) 1,2-propanediol,
(ii) terephthalic acid, and
(iii) a molecular weight increasing agent,
wherein the polyester material has a number-average molecular weight (Mn) of at least about 6,100 Da and a glass transition temperature (Tg) of at least about 80 °C.

By "molecular weight increasing agent" we mean a substance that increases the number-average molecular weight (Mn) of the polyester material.

The molecular weight increasing agent may be any suitable compound capable of increasing the Mn of the polyester material. Suitably, the molecular weight increasing agent may comprise a polyacid, a polyol or a combination thereof.

In certain embodiments, the molecular weight increasing agent may comprise a polyacid. Suitably, the molecular weight increasing agent may comprise a diacid.

In certain suitable embodiments, the molecular weight increasing agent comprises a diacid of general formula (I)

ROOC-Xₙ-COOR formula (I)

wherein each R independently represents hydrogen or an alkyl, alkenyl, alkynyl, or aryl group; n = 0 or 1; and wherein X represents a bridging group selected from: an alkylene group; an alkenylene group; an alkynylene group; an arylene group; wherein the bridge between the - COOR groups is C₁ or C₂.

Suitable examples of polyacid molecular weight increasing agents include, but are not limited to one or more of the following: oxalic acid; malonic acid; succinic acid; orthophthalic acid; maleic acid; fumaric acid; itaconic acid; methylmalonic acid; ethylmalonic acid; propylmalonic acid; 2-methylsuccinic acid; 2-ethylsuccinic acid; 2-propylsuccinic acid; trans-cyclopentane-1,2-dicaboxylic acid; cis- cyclopentane-1,2-dicaboxylic acid; trans-cyclohexane-1,2-dicaboxylic acid; cis-cyclohexane-1,2-dicaboxylic acid; acids and anhydrides of all the aforementioned acids and combinations thereof. In certain embodiments, the polyacid comprises maleic anhydride or itaconic acid or a combination thereof.

Suitably, the polyacid molecular weight increasing agent comprises maleic anhydride.

In certain embodiments, the molecular weight increasing agent may comprise a polyol. Suitably, the molecular weight increasing agent may comprise a triol.

In certain embodiments, the hydroxyl groups of the polyol molecular weight increasing agents may be connected by a C₁ to C₃ alkylene group. The C₁ to C₃ alkylene group may be substituted or unsubstituted. The C₁ to C₃ alkylene group may be optionally substituted with one or more of the following: halo; hydroxyl; nitro; mercapto; amino; alkyl; alkoxy; aryl; sulfo and sulfoxy groups. The C₁ to C₃ alkylene group may be linear or branched. The C₁ to C₃ alkylene group may be saturated or unsaturated.

In certain embodiments, there may be no more than 3 carbon atoms connecting between the hydroxyl groups.

Suitable examples of polyol molecular weight increasing agents include, but are not limited to one or more of the following: methylene glycol; ethylene glycol; propylene glycol; neopentyl glycol; 1,2-propanediol; butyl ethyl propanediol; 2-methyl-1,3-propanediol; 2-ethyl-2-butyl-1,3-propanediol; trimethylolmethane; trimethylolethane; trimethylolpropane; glycerol; pentaerythritol; and combinations thereof. Suitably, the polyol molecular weight increasing agent comprises trimethylolpropane.

The terephthalic acid (ii) may be in any suitable form. It will be well known to a person skilled in the art that terephthalic acid is often provided in a form which also contains isophthalic acid as a contaminant. However, in one embodiment, the terephthalic acid may be provided in a form which is substantially free of isophthalic acid. By "substantially free" we mean to refer to terephthalic acid which contains less than about 5 wt% isophthalic acid, preferably less than about 2 wt% isophthalic acid, more preferably less than about 0.05 wt% isophthalic acid. In certain embodiments the terephthalic acid may contain about 0 wt% isophthalic acid.

The polyester material may comprise any suitable molar ratio of (i)+(ii):(iii). In certain embodiments, the molar ratio of (i)+(ii):(iii) may range from about 100:1 to 1:1, such as from about 80:1 to 5:1. As a non-limiting example, when the molecular weight increasing agent is a polyacid the molar ratio of (i)+(ii):(iii) may be about 25:1. As a further non-limiting example, when the molecular weight increasing agent is a polyol the molar ratio of (i)+(ii):(iii) may be about 80:1.

In certain embodiments, the polyester material may have a low degree of branching. The polyester material may be substantially linear or be slightly branched. For example, the degree of branching of the polyester material may be measured by the polydispersity index of the said high molecular weight polyester material. The polydispersity index of a polymer is given by the ratio of Mw to Mn (Mw/Mn), wherein Mw is the weight-average molecular weight and Mn is the number average molecular weight. Suitably, the polydispersity index of the polyester material is from about 1 to 20, suitably from about 2 to 10.

In certain embodiments, the polyester material may have a molecular weight above the entanglement molecular weight of said polyester material.

"Entanglement molecular weight" and like terms, as used herein, refers to the molecular weight at which the polyester material becomes large enough to entangle. For the avoidance of doubt the molecular weight may be the number-average molecular weight or the weight-average molecular weight. Entanglement molecular weight is typically defined as the molecular weight at which the physical properties, especially the viscosity of the polyester material change.

Typically, the entanglement molecular weight is determined by plotting the log of the melt viscosity against the log of the molecular weight of a polymer. Typically, as the molecular weight increases, the plot follows a gently upward sloping linear path. However, once the entanglement molecular weight is reached, the gently sloping linear path increases to a rapidly sloping linear path. Hence the entanglement molecular weight may be determined as the point on the plot where the slope changes from gently sloping to rapidly sloping.

Techniques to measure the melt viscosity will be well known to a person skilled in the art. Suitably, the melt viscosity may be measured at a high shear rate such as that applied by a cone and plate rheometer, typical methods are as described in standard methods such as ASTM D4287. Films formed from the polyester material according to the present invention having a molecular weight above the critical entanglement molecular weight of the said polyester material, were found to have superior film forming properties.

The components (i), (ii) and (iii) of the polyester material may be contacted in any order.

In certain embodiments, the polyester material may be prepared in a one step process. Suitably, in a one step process, the components (i), (ii) and (iii) are all reacted together at the same time. Suitably, the polyester material may be prepared in a one step process where the molecular weight increasing agent comprises a polyol.

Suitably, in a one step process, components (i), (ii) and (iii) may be contacted together at a first reaction temperature, T1, wherein T1 may be a temperature of between about 90°C and 260°C, suitably from about 200°C to 250°C, such as from about 200°C to 230°C.

Typically, in a one step process, the reaction is allowed to proceed for a total period of about 1 minute to 100 hours, such as from about 2 hours to 80 hours. It will be appreciated by a person skilled in the art that the reaction conditions may be varied depending on the reactants used.

The coating compositions according to the present invention may comprise any suitable amount of the binder comprising a polyester material (a). The coating compositions according to the present invention may comprise from about 1 to 100 wt%, suitably from about 20 to 90 wt%, such as from about 30 to 80 wt% of the binder comprising a polyester material based on the total solid weight of the coating composition.

In certain embodiments, the binder comprising a polyester material (a) according to the present invention may optionally comprise a further binder material. Suitable further binder materials will be well known to a person skilled in the art. Suitable examples of further binder materials include, but are not limited to the following: polyester resins; acrylic resins; alkyd resins; polyurethane resins; polysiloxane resins; epoxy resins or combinations thereof. The further binder material, when present, may suitably be used in the binder comprising a polyester material (a) according to the present invention in amounts from about 1 to 50 wt%, suitably from about 5 to 30 wt%, such as from about 5 to 20 wt% based on the total solid weight of the binder comprising a polyester material (a).

The coating compositions according to the present invention comprise a phenolic crosslinker (b). Suitable phenolic crosslinkers will be well known to a person skilled in the art. Non-limiting examples of phenolic resins are those formed from the reaction of a phenol with formaldehyde. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997. Suitably, the phenolic resins are of the resol type. By "resol type" we mean resins formed in the presence of a basic (alkaline) catalyst and optionally an excess of formaldehyde. Suitable examples of commercially available phenolic resins include, but are not limited to PHENODUR® PR285, PR307, PR516, PR722, PR1785 and PR612; VARCUM® 2891; DUREZ® 33356; SFC112; SFC138B; and resins sold under the trademark BAKELITE® such as BAKELITE 6572.

The coating compositions according to the present invention may comprise any suitable amount of the phenolic crosslinker (b). In certain embodiments, the coating compositions according to the present invention may comprise from about 0.5 to 50 wt%, suitably from about 1 to 30 wt%, such as from about 5 to 20 wt%, or even from about 5 to 15 wt% of the phenolic crosslinker (b) based on the total solid weight of the coating composition.

The coating compositions according to the present invention comprise an amino crosslinker (c). Suitable amino crosslinkers will be well known to a person skilled in the art. Non-limiting examples of amino crosslinkers include those which are formed from the reaction of a triazine such as melamine or benzoguanamine with formaldehyde. Suitably, the resultant compounds may be etherified with an alcohol such as methanol, ethanol, butanol or combinations thereof. The preparation and use of aminoplast resins is described in "The Chemistry and Applications of Amino Crosslinking Agents or Aminoplast", Vol V, Part II, page 21 ff., edited by Dr Oldring; John Wiley and Sons/Cita Technology Limited, London, 1998. Suitable examples of commercially available aminoplast resins include but are not restricted to those sold under the trademark MAPRENAL® such as MAPRENAL® MF980; those sold under the trademark URAMEX® such as URAMEX BF892 and URAMEX BF891; those sold under the trademark ITAMIN® such as ITAMIN BG143, ITAMIN BG145 and ITAMIN BG143; and those sold under the trademark CYMEL® such as CYMEL 303, CYMEL 325, CYMEL 323, CYMEL 327 and CYMEL 1123, available from Cytec Industries.

The coating compositions according to the present invention may comprise any suitable amount of the amino crosslinker (c). In certain embodiments, the coating composition according to the present invention may comprise from about 0.5 to 60 wt%, suitably from about 1 to 50 wt%, such as from about 5 to 40 wt%, or even from about 10 to 30 wt% of the amino crosslinker (c) based on the total solid weight of the coating composition.

The coating compositions according to the present invention are substantially free of bisphenol A (BPA) and derivatives thereof. In certain embodiments, the coating compositions according to the present invention may be essentially free or may be completely free of bisphenol A (BPA) and derivatives thereof. Derivatives of bisphenol A include, for example, bisphenol A diglycidyl ether (BADGE).

The coating compositions according to the present invention are substantially free of bisphenol F (BPF) and derivatives thereof. In certain embodiments, the coating compositions according to the present invention may be essentially free or may be completely free of bisphenol F (BPA) and derivatives thereof. Derivatives of bisphenol F include, for example, bisphenol F diglycidyl ether (BPFG).

The compounds or derivatives thereof mentioned above, i.e. BPA, BPF and derivatives thereof, may not be added to the composition intentionally but may be present in trace amounts because of unavoidable contamination from the environment. By "substantially free" we mean to refer to coating compositions containing less than about 1000 parts per million (ppm) of any of the compounds or derivatives thereof mentioned above. By "essentially free" we mean to refer to coating compositions containing less than about 100 ppm of any of the compounds or derivatives thereof mentioned above. By "completely free" we mean to refer to coating compositions containing less than about 20 parts per billion (ppb) of any of the compounds or derivatives thereof.

The coating compositions according to the present invention may further comprise one or more solvent. The coating composition may comprise a single solvent or a mixture of solvents. The solvent may comprise water, an organic solvent, a mixture of water and an organic solvent or a mixture of organic solvents.

The organic solvent suitably has sufficient volatility to essentially entirely evaporate from the coating composition during the curing process. As a non-limiting example, the curing process may be by heating at 130-230 °C for 1-15 minutes.

Suitable organic solvents include, but are not limited to one or more of the following: aliphatic hydrocarbons such as mineral spirits and high flash point naphtha; aromatic hydrocarbons such as benzene; toluene; xylene; solvent naphtha 100, 150, 200; those available from Exxon-Mobil Chemical Company under the SOLVESSO trade name; alcohols such as ethanol; n-propanol; isopropanol; and n-butanol; ketones such as acetone; cyclohexanone; methylisobutyl ketone; methyl ethyl ketone; esters such as ethyl acetate; butyl acetate; n-hexyl acetate; glycols such as butyl glycol; glycol ethers such as methoxypropanol; ethylene glycol monomethyl ether; ethylene glycol monobutyl ether and combinations thereof. The solvent, when present, may suitably be used in the coating composition in amounts from about 10 to 90 wt%, such as from about 20 to 80 wt%, or even from about 30 to 70 wt% based on the total solid weight of the coating composition.

The polyester material may be dissolved or dispersed in the said one or more solvent during and/or after its formation.

In certain embodiments the coating compositions of the present invention may further comprise a catalyst. Any catalyst typically used to catalyse crosslinking reactions between polyester materials and crosslinking agents, such as for example phenolic crosslinkers and/or amino crosslinkers, may be used. Suitable catalysts will be well known to the person skilled in the art. Suitable catalysts include, but are not limited to one or more of the following: phosphoric acid; alkyl aryl sulphonic acids such as dodecyl benzene sulphonic acid; methane sulphonic acid; para-toluene sulphonic acid; dinonyl naphthalene disulphonic acid; phenyl phosphinic acid and combinations thereof. In certain embodiments the catalyst may comprise an acid catalyst. Suitably, the catalyst may comprise phosphoric acid. The catalyst, when present, may be used in the coating composition in any suitable amount. In certain embodiments the catalyst, when present, may be used in amounts from about 0.01 to 10 wt%, suitably from about 0.1 to 2 wt% based on the total solid weight of the coating composition..

The coating compositions according to the present invention may optionally contain an additive or combination of additives. The coating compositions may optionally contain any suitable additive. Suitable additives will be well known to the person skilled in the art. Examples of suitable additives include, but are not limited to one or more of the following: lubricants; pigments; plasticisers; surfactants; flow control agents; thixotropic agents; fillers; diluents; organic solvents and combinations thereof.

Suitable lubricants will be well known to the person skilled in the art. Suitable examples of lubricants include, but are not limited to one or more of the following: carnauba wax and polyethylene type lubricants. In certain embodiments the lubricant, when present, may be used in the coating composition in amounts of at least 0.01 wt% based on the total solid weight of the coating composition.

Suitable pigments will be well known to the person skilled in the art. A suitable pigment may be, for example, titanium dioxide. The pigment, when present, may be used in the coating composition in any suitable amount. In certain embodiments, the pigment, when present, may be used in the coating composition in amounts up to about 90 wt%, such as up to about 50 wt%, or even up to about 10 wt% based on the total solid weight of the coating composition.

Surfactants may optionally be added to the coating composition in order to aid in flow and wetting of the substrate. Suitable surfactants will be well known to the person skilled in the art. Suitably the surfactant, when present, is chosen to be compatible with food and/or beverage container applications. Suitable surfactants include, but are not limited to one or more of the following: alkyl sulphates (e.g., sodium lauryl sulphate); ether sulphates; phosphate esters; sulphonates; and their various alkali, ammonium, amine salts; aliphatic alcohol ethoxylates; alkyl phenol ethoxylates (e.g. nonyl phenol polyether); salts and/or combinations thereof. The surfactants, when present, may be present in amounts from about 0.01 wt% to 10 wt%, suitably from about 0.01 to 5 wt%, such as from about 0.01 to 2 wt% based on the total solid weight of the coating composition.

In certain embodiments, the coating compositions according to the present invention may be substantially free, may be essentially free or may be completely free of dialkyltin compounds, including oxides or other derivatives thereof. Examples of dialkyltin compounds include, but are not limited to one or more of the following: dibutyltindilaurate (DBTDL); dioctyltindilaurate; dimethyltin oxide; diethyltin oxide; dipropyltin oxide; dibutyltin oxide (DBTO); dioctyltinoxide (DOTO) or combinations thereof. By "substantially free" we mean to refer to coating compositions containing less than about 1000 parts per million (ppm) of any of the compounds or derivatives thereof mentioned above. By "essentially free" we mean to refer to coating compositions containing less than about 100 ppm of any of the compounds or derivatives thereof mentioned above. By "completely free" we mean to refer to coating compositions containing less than about 20 parts per billion (ppb) of any of the compounds or derivatives thereof.

The pull tab according to the present invention may be formed from any suitable material. Suitable materials will be well known to a person skilled in the art. Suitable examples include, but are not limited to one or more of the following: steel; tinplate; tin-free steel (TFS); galvanised steel, such as for example electro-galvanised steel; aluminium; aluminium alloy; and combinations thereof. In certain embodiments, the pull tab may be formed from tinplate, tin-free steel or galvanised steel.

The coating compositions according to the present invention may be applied to the pull tab before or after its formation. For example, the coating compositions may be applied to a coil or sheet of metal from which the pull tab is subsequently stamped out of. Alternatively, the pull tab may be prefabricated and the coating compositions of the present invention may be subsequently applied.

The coating compositions according to the present invention may be applied to the pull tab, either before or after its formation, by any suitable method. Suitable methods include, but are not limited to, one or more of the following: electrocoating; spraying; electrostatic spraying; dipping; rolling; brushing; and the like.

The coating compositions according to the present invention may be applied to the pull tab to any suitable dry film thickness. In certain embodiments the coating compositions may be applied to a dry film thickness from about 0.1µm (microns) to 2mm, suitably from about 1µm to 1mm, more suitably from about 2µm to 50µm, or even from about 2µm to 20µm.

The coating compositions according to the present invention may be applied to the pull tab as a single layer or as part of a multi layer system. In certain embodiments, the coating composition may be applied as a single layer. In certain embodiments, the coating composition may be applied as the first coat of a multi coat system. Suitably, the coating composition may be applied as an undercoat or a primer. The second, third, fourth etc. coats may comprise any suitable paint such as those containing, for example, epoxy resins; polyester resins; polyurethane resins; polysiloxane resins; hydrocarbon resins or combinations thereof. In certain embodiments, the coating compositions may be applied on top of another paint layer as part of a multi layer system. For example, the coating composition may be applied on top of a primer. The coating compositions may form an intermediate layer or a top coat layer. The coating composition may be applied to the pull tab once or multiple times.

According to a second aspect of the present invention there is provided a food and/or beverage can comprising a pull tab coated on at least a portion thereof with a coating composition comprising:
(a) a binder comprising a polyester material,
(b) a phenolic crosslinker, and
(c) an amino crosslinker,
wherein the coating composition is substantially free of bisphenol A (BPA), bisphenol F (BPF), bisphenol A diglycidyl ether (BADGE) and bisphenol F diglycidyl ether (BFDGE).

According to a third aspect of the present invention there is provided the use of a coating composition for coating a pull tab on at least a portion thereof, the coating comprising:
(a) a binder comprising a polyester material,
(b) a phenolic crosslinker, and
(c) an amino crosslinker,
wherein the coating composition is substantially free of bisphenol A (BPA), bisphenol F (BPF), bisphenol A diglycidyl ether (BADGE) and bisphenol F diglycidyl ether (BFDGE).

According to a fourth aspect of the present invention there is provided a method of coating a pull tab on at least a portion thereof, the method comprising the step of coating the pull tab on at least a portion thereof with a coating composition comprising:
(a) a binder comprising a polyester material,
(b) a phenolic crosslinker, and
(c) an amino crosslinker,
wherein the coating composition is substantially free of bisphenol A (BPA), bisphenol F (BPF), bisphenol A diglycidyl ether (BADGE) and bisphenol F diglycidyl ether (BFDGE).

There may be provided a pull tab coating composition, the coating composition comprising:
(a) a binder comprising a polyester material,
(b) a phenolic crosslinker, and
(c) an amino crosslinker,
wherein the coating composition is substantially free of bisphenol A (BPA), bisphenol F (BPF), bisphenol A diglycidyl ether (BADGE) and bisphenol F diglycidyl ether (BFDGE).

All of the features contained herein may be combined with any of the above aspects and in any combination.

For a better understanding of the invention, and to show how embodiments of the same may be carried into effect, reference will now be made, by way of example, to the following experimental data.

### Examples

### Coating example 1

A coating composition was prepared according to the formulation in Table 1. All amounts are given in parts by weight.

Briefly, the coating composition was prepared in a vessel equipped with stirring at ambient temperature. The dispersing or mixing blade of the vessel was approximately one third (1/3) of the diameter of the vessel itself. Item 1 was first added to the vessel and then item 2 was added under slow agitation. The stirring speed was then increased to approximately 2,000 rpm until a complete blend was achieved. After this, items 3, 4, 5, 6 were added to the vessel followed by items 7, 8, 9 and 10 under stirring at 1,500 rpm. The viscosity was finally adjusted with items 11 and 12.

**Table 1 - Formulation of coating example 1**

| **Item No.** | **Ingredient** | **Amount / pbw** |
|---|---|---|
| 1 | URALAC SH978¹ | 53.0 |
| 2 | PHENODUR PR897² | 9.7 |
| 3 | BAKELITE 6535³ | 2.0 |
| 4 | LUWIPAL 017⁴ | 7.0 |
| 5 | CYMEL 325⁵ | 0.5 |
| 6 | CYCAT 600⁶ | 0.03 |
| 7 | Lanco Wax 1780⁷ | 0.1 |
| 8 | TEGO Glide 4415⁸ | 1.0 |
| 9 | BYK 310⁹ | 0.02 |
| 10 | Xylene¹⁰ | 7.65 |
| 11 | Butyl diglycol acetate (ABDG)¹¹ | 10.0 |
| 12 | SOLVESSO 150ND¹² | 9.0 |
| | Total | 100.0 |

| | | |
|---|---|---|
| ¹polyester resin from DSM² phenolic resin from Cytec Industries Inc. ³from Hexion Speciality Chemicals ⁴phenolic resin from Hexion Speciality Chemicals ⁵methylated melamine-formaldehyde resin from Allnex ⁶organic acid catalyst from Allnex ⁷PTFE-modified polyethylene wax from Lubrizol ⁸wetting agent from Evonik ⁹additive from BYK-Chemie ¹⁰solvent ¹¹solvent ¹²solvent | | |

Coating example 1 was applied to each of tinplate, tin-free steel (TFS) and electro-zinced metal panels. The coating was applied with either a roller coater or a bar coater. The applied film weight was between 4 and 6 grams per square metre (gsm) died coating weight. A single coat was applied. After application, the coating was dried for 16 to 20 seconds in a fan assisted oven at a temperature of 240-300 °C.

### Comparative coating example 1

The commercially available product PPG3975-601/A, a BPA epoxy cross linked coating, was applied to each of tinplate, tin-free steel (TFS) and electro-zinced metal panels. The coating was applied with either a roller coater or a bar coater. The applied film weight was between 4 and 6 grams per square metre (gsm) died coating weight. A single coat was applied. After application, the coating was dried for 16 to 20 seconds in a fan assisted oven at a temperature of 240-300 °C.

Properties of coating example 1 and comparative coating example 1 were tested via the following methods. Results are shown in Table 2.

### Test Methods

**Blush test in water:** The coated panels were cut into 10cm x 5cm panels and then placed in a can containing water such that half of the panel was submerged in the water. The can was then placed in an autoclave and processed at 121 °C for 90 minutes. After this time, the panels were examined visually for blushing (i.e. whitening of the coating), blistering, discolouration and adhesion loss

**Blush test in Detergent:** The procedure as described above for the blush in water test was carried with the exception that detergent was added to the water to make a one percent solution. The detergent used was Teepol.

**Wedge bend:** A 10cm x 4cm coated panel was bent on a 6mm steel rod to form a U-shaped strip 10cm long and 2cm wide. The U-shaped strip was then placed onto a metal block with a built in tapered recess. A 2kg weight was dropped onto the recessed block containing the U-shaped strip from a height of 57cm in order to from a wedge. The test piece was then immersed in a copper sulphate (CuSO₄) solution acidified with hydrochloric acid (HCI) for 2 minutes, followed by rinsing with tap water. The sample was then carefully dried by blotting any residual water with tissue paper. The length of coating without any fracture was measured. The result was quoted in mm passed. The wedge bends were tested in triplicate and the average value was quoted.

**Mobility test:** Surface mobility (or lubricity) was measured using an ALTEK Model 9505 mobility/lubricity tester. The sample was mounted in the machine and a test sequence was initiated according to the manufacturer's instructions. The coefficient of friction, as determined from the test sequence, was quoted from the reading of the electronic analogue meter.

**T-Bend:** This test was carried out according to ISO 17132:2007 ("Paints and varnishes - T-bend test"). Briefly, a coated panel was bent, i.e. folded, over itself and then a 2kg weight in the form of a hammer was dropped onto the panel from a height of 57cm. The process was then repeated. The minimum number of times that the panel could be bent without cracking or loss of adhesion, i.e. flaking, of the coating occurring was quoted.

**Blocking test:** The coated panels were cut into a series of 10cm x 10cm and were piled one on top of the other with a weight appropriate to simulate the pressure applied on the material during real usage and storage. The weight used was 1 ton. The weight was applied for 16 hours at 40 °C. After this time, the degree of difficulty required to separate the coated panels was evaluated visually.

**Table 2 - Test results of coating example 1 and comparative coating example 1**

| | **Coating example 1** | | | **Comparative coating example 1** | | |
|---|---|---|---|---|---|---|
| | **Tinplate** | **TFS** | **Electro-zinced** | **Tinplate** | **TFS** | **Electro-zinced** |
| **Blush test in water** | Pass | Pass | Pass | Pass | Pass | Pass |
| **Blush test in detergent** | Pass | Pass | Pass | Pass | Pass | Pass |
| **Wedge Bend** | 80 | 86 | 70 | 77 | 80 | 65 |
| **Mobility Test** | 0.065 | 0.065 | 0.065 | 0.06 | 0.06 | 0.06 |
| **T-bend** | 3T | 3T | 3T | 3T | 3T | 3T |
| **Blocking test** | Pass | Pass | Pass | Pass | Pass | Pass |

The results show that the coating compositions according to the present invention are an alternative, or represent an improvement, over those of the comparative examples.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A pull tab for a food and/or beverage can coated on at least a portion thereof with a coating composition comprising:
(a) a binder comprising a polyester material,
(b) a phenolic crosslinker, and
(c) an amino crosslinker,
wherein the coating composition is substantially free of bisphenol A (BPA), bisphenol F (BPF), bisphenol A diglycidyl ether (BADGE) and bisphenol F diglycidyl ether (BFDGE).

2. A pull tab according to claim 1, wherein the binder comprising a polyester material (a) is present in an amount of between 30 to 80 wt%.

3. A pull tab according to either of claim 1 or claim 2, wherein the phenolic crosslinker (b) is present in an amount of between 5 to 20 wt%.

4. A pull tab according to any preceding claim, wherein the amino crosslinker (c) is present in an amount of between 5 to 40 wt%.

5. A pull tab according to any preceding claim, wherein the coating composition further comprises a catalyst.

6. A pull tab according to claim 5, wherein the catalyst is present in an amount of between 0.1 to 2 wt%.

7. A pull tab according to any preceding claim, wherein the coating composition is substantially free of dialkyl tin compounds including oxides or other derivatives thereof.

8. A pull tab according to any preceding claim, wherein the dry film thickness of the coating composition is between 1µm to 1mm.

9. A food and/or beverage can comprising a pull tab according to any preceding claim.

10. Use of a coating composition for coating a pull tab on at least a portion thereof, the coating comprising:
(a) a binder comprising a polyester material,
(b) a phenolic crosslinker, and
(c) an amino crosslinker,
wherein the coating composition is substantially free of bisphenol A (BPA), bisphenol F (BPF), bisphenol A diglycidyl ether (BADGE) and bisphenol F diglycidyl ether (BFDGE).

11. A method for coating a pull tab on at least a portion thereof, the method comprising the step of coating the pull tab on at least a portion thereof with a coating composition comprising:
(a) a binder comprising a polyester material,
(b) a phenolic crosslinker, and
(c) an amino crosslinker,
wherein the coating composition is substantially free of bisphenol A (BPA), bisphenol F (BPF), bisphenol A diglycidyl ether (BADGE) and bisphenol F diglycidyl ether (BFDGE).

## Patentansprüche

1. Zuglasche für eine Nahrungsmittel- und/oder Getränkedose, die wenigstens auf einem Abschnitt davon mit einer Beschichtungszusammensetzung beschichtet ist, die Folgendes umfasst:
(a) ein Bindemittel, das ein Polyestermaterial umfasst,
(b) ein phenolisches Vernetzungsmittel und
(c) ein Amino-Vernetzungsmittel,
wobei die Beschichtungszusammensetzung im Wesentlichen frei von Bisphenol A (BPA), Bisphenol F (BPF), Bisphenol-A-diglycidylether (BADGE) und Bisphenol-F-diglycidylether (BFDGE) ist.

2. Zuglasche nach Anspruch 1, wobei das ein Polyestermaterial umfassende Bindemittel (a) in einer Menge zwischen 30 und 80 Gew.-% vorhanden ist.

3. Zuglasche nach Anspruch 1 oder Anspruch 2, wobei das phenolische Vernetzungsmittel (b) in einer Menge zwischen 5 und 20 Gew.-% vorhanden ist.

4. Zuglasche nach einem der vorhergehenden Ansprüche, wobei das Amino-Vernetzungsmittel (c) in einer Menge zwischen 5 und 40 Gew.-% vorhanden ist.

5. Zuglasche nach einem der vorhergehenden Ansprüche, wobei die Beschichtungszusammensetzung weiterhin einen Katalysator umfasst.

6. Zuglasche nach Anspruch 5, wobei der Katalysator in einer Menge zwischen 0,1 und 2 Gew.-% vorhanden ist.

7. Zuglasche nach einem der vorhergehenden Ansprüche, wobei die Beschichtungszusammensetzung im Wesentlichen frei von Dialkylzinnverbindungen einschließlich Oxiden oder anderen Derivaten davon ist.

8. Zuglasche nach einem der vorhergehenden Ansprüche, wobei die Trockenschichtdicke der Beschichtungszusammensetzung zwischen 1 µm und 1 mm beträgt.

9. Nahrungsmittel- und/oder Getränkedose, umfassend eine Zuglasche nach einem der vorhergehenden Ansprüche.

10. Verwendung einer Beschichtungszusammensetzung zum Beschichten einer Zuglasche auf wenigstens einem Abschnitt davon, wobei die Zusammensetzung Folgendes umfasst:
(a) ein Bindemittel, das ein Polyestermaterial umfasst,
(b) ein phenolisches Vernetzungsmittel und
(c) ein Amino-Vernetzungsmittel,
wobei die Beschichtungszusammensetzung im Wesentlichen frei von Bisphenol A (BPA), Bisphenol F (BPF), Bisphenol-A-diglycidylether (BADGE) und Bisphenol-F-diglycidylether (BFDGE) ist.

11. Verfahren zum Beschichten einer Zuglasche auf wenigstens einem Abschnitt davon, wobei das Verfahren den Schritt des Beschichtens der Zuglasche auf wenigstens einem Abschnitt davon mit einer Beschichtungszusammensetzung umfasst, die Folgendes umfasst:
(a) ein Bindemittel, das ein Polyestermaterial umfasst,
(b) ein phenolisches Vernetzungsmittel und
(c) ein Amino-Vernetzungsmittel,
wobei die Beschichtungszusammensetzung im Wesentlichen frei von Bisphenol A (BPA), Bisphenol F (BPF), Bisphenol-A-diglycidylether (BADGE) und Bisphenol-F-diglycidylether (BFDGE) ist.

## Revendications

1. Languette de traction pour un produit alimentaire et/ou une canette de boisson revêtue sur au moins une partie de celle-ci avec une composition de revêtement comprenant :
(a) un liant comprenant un matériau de polyester,
(b) un agent de réticulation de type phénolique, et
(c) un agent de réticulation de type amino,
la composition de revêtement étant sensiblement exempte de bisphénol A (BPA), de bisphénol F (BPF), de diglycidyléther de bisphénol A (BADGE) et de diglycidyléther de bisphénol F (BFDGE).

2. Languette de traction selon la revendication 1, le liant comprenant un matériau de polyester (a) étant présent en une quantité comprise entre 30 et 80 % en poids.

3. Languette de traction selon l'une ou l'autre parmi la revendication 1 et la revendication 2, l'agent de réticulation de type phénolique (b) étant présent en une quantité comprise entre 5 et 20 % en poids.

4. Languette de traction selon une quelconque revendication précédente, l'agent de réticulation de type amino (c) étant présent en une quantité comprise entre 5 et 40 % en poids.

5. Languette de traction selon une quelconque revendication précédente, la composition de revêtement comprenant en outre un catalyseur.

6. Languette de traction selon la revendication 5, le catalyseur étant présent en une quantité comprise entre 0,1 et 2 % en poids.

7. Languette de traction selon une quelconque revendication précédente, la composition de revêtement étant sensiblement exempte de composés de type dialkylétain y compris des oxydes ou d'autres dérivés correspondants.

8. Languette de traction selon une quelconque revendication précédente, l'épaisseur de film sec de la composition de revêtement étant comprise entre 1 µm et 1 mm.

9. Produit alimentaire et/ou canette de boisson comprenant une languette de traction selon une quelconque revendication précédente.

10. Utilisation d'une composition de revêtement pour le revêtement d'une languette de traction sur au moins une partie de celle-ci, le revêtement comprenant :
(a) un liant comprenant un matériau de polyester,
(b) un agent de réticulation de type phénolique, et
(c) un agent de réticulation de type amino,
la composition de revêtement étant sensiblement exempte de bisphénol A (BPA), de bisphénol F (BPF), de diglycidyléther de bisphénol A (BADGE) et de diglycidyléther de bisphénol F (BFDGE).

11. Procédé pour le revêtement d'une languette de traction sur au moins une partie de celle-ci, le procédé comprenant l'étape de revêtement de la languette de traction sur au moins une partie de celle-ci avec une composition de revêtement comprenant :
(a) un liant comprenant un matériau de polyester,
(b) un agent de réticulation de type phénolique, et
(c) un agent de réticulation de type amino,
la composition de revêtement étant sensiblement exempte de bisphénol A (BPA), de bisphénol F (BPF), de diglycidyléther de bisphénol A (BADGE) et de diglycidyléther de bisphénol F (BFDGE).
